# EUROPEAN PATENT APPLICATION

(11) **EP 4 825 170 A1**
(43) Date of publication of application: **21.10.2026**
(21) Application number: 25170774.1
(22) Date of filing: 15.04.2025
(51) Int. Cl.: A01M 1/02, A01M 1/10, G06T 7/00, A01M 1/14, A01M 1/20

(54) **MONITORING OF A BED BUG TREATMENT SESSION**

(71) Applicant: SimulAir AB, 196 30 Kungsängen (SE)
(72) Inventor: ÅSTRAND, Maja, 11362 Stockholm (SE); LILJA, Simon, 196 30 Kungsängen (SE)
(74) Representative: Brann AB

(57) **Abstract**

The present disclosure relates to a system (200) for monitoring a bed bug treatment session. The system (200) comprises a bed bug attracting device (10) having a bed bug attractant (11), a bed bug trap element (180), a camera system (220) arranged at and configured to capture images (600) of a bed bug detection area (DA) in connection with the bed bug trap element (180) at a plurality of time instances, t_{(1..N)}, during a bed bug treatment session; and a processing device (210) communicatively connected to the camera system (220). The processing device (210) repeatedly receives image input signals (S_{IMAGE}) indicative of the captured images (600) from the camera system (220) and, in response to each captured image (600ᵢ), detects bed bugs (601, 601', 601") present in the bed bug detection area (DA) and determines the number of detected bed bugs present in the bed bug detection area (DA) at the defined time instance, tᵢ. Based on the number of detected bed bugs present in the bed bug detection area (DA) at the defined time instances, t_{(1..N)}, the processing device (210) is configured to determine an efficiency parameter indicative of the efficiency of the bed bug treatment session, based on the number of detected bed bugs present in the bed bug detection area (DA) at the defined time instances, t_{(1..N)}. The present disclosure also related to a corresponding computerized method and computer program.

## Description

### TECHNICAL FIELD

The present invention relates generally to addressing bed bug infestations. Especially, the invention relates to solutions according to the appended claims, including a system and computer-implemented method for monitoring a bed bug treatment session. The invention also relates to a corresponding computer program and a non-volatile data carrier storing such a computer program.

### BACKGROUND

Bed bug infestation is a rising problem in many densely populated areas. These nocturnal insects tend to hide for instance in beds or in cracks present in walls and floor. A number of adverse health effects may occur due to bed bug bites, including skin rashes, allergic reactions, and/or mental distress.

When addressing bed bug infestations, current treatments often require prolonged human presence to lure bed bugs into contact with pesticides, a process that can extend from 8 weeks to a year. This method is not only inefficient but places a significant mental and financial strain on affected individuals and businesses, such as hotels, which may then resort to other common methods such as costly, intrusive, and damaging heat treatments. Heat treatments also lack in efficiency, so besides the negative effects of the treatment it is further uncertain if the infestation will actually be dealt with. Bed bug treatment and extermination processes that do not require human presence are of course preferable, as such solutions offer a mental respite for individuals and a cost-effective, damage-free alternative for businesses. In order to be effective, a bed bug attracting and capturing solution must be able to generate sufficient attraction for an extended period of time. Existing solutions have attempted to devise bed bug attracting, and/or capturing devices in the past for replacing the human bait system. Some solutions employ different attracting means such as odors originating from bed bug pheromones, human sweat components or other organic chemicals which acts as lures in order to attract bed bugs to a trapping mechanism. Naturally, bed bugs are attracted to humans by the CO₂ produced by exhalations. Some infestation control solutions have therefore been proposed that attract bed bugs based on the emission of CO₂, such as for instance US2009145019 and US2022248654. However, the known solutions lack in efficiency, i.e. the efficiency in attracting of bed bugs without the use of a human bait, the length of treatment time (where a shorter time is of course desirable) and the resulting success rate. An example of a solution that solves the efficiency issues of the attracting device and contributes to the advantageous effects above is provided in the applicant's own patent application No. 2451256-8, which discloses a method as well as a device for attracting bed bugs, also referred to as a bed bug attraction or attracting device, for efficiently attracting and capturing bed bugs, thereby drastically cutting down the treatment time compared to previously known solutions. These solutions allow for a more targeted and efficient attracting and eradication approach compared to the prior solutions, making the process quicker and less intrusive.

A further issue with known bed bug infestation treatments is that it is very uncertain how the treatment is proceeding, as well as if, or when, the treatment process is completed. There is further no way of knowing with certainty if the entire infestation has been dealt with. This leads to either having to end the treatment process/treatment session with a large degree of uncertainty, risking that the infestation returns, or having to prolong the treatment process for an unnecessarily long time to be certain that the infestation is gone, which is costly and causes the treated spaces to be unusable for a longer period of time.

There is therefore a need for further development within this field to improve bed bug treatments by achieving a reduced (or at least not unnecessarily prolonged) treatment time, a higher certainty of treatment success, and a reduced risk of a returning infestation in the treated space. Ultimately, such a solution would benefit not just those directly dealing with infestations but also contribute to public health and environmental sustainability.

### SUMMARY

It would be advantageous to achieve a solution for monitoring a bed bug treatment session overcoming, or at least alleviating, at least some of the above-mentioned drawbacks. The object is solved or at least ameliorated by a computerized method and system for monitoring a bed bug treatment session according to the appended claims. In particular, an object of the present disclosure is to determine a treatment efficiency parameter, or efficiency parameter, that is indicative of the efficiency of a current bed bug treatment session, in real time, based on recognition of infestation patterns through analysis of captured images that depict bed bugs captured in a bed bug trapping element of a bed bug attracting device at different time instances during the treatment session, optionally in combination with historical data obtained from previous treatment sessions employing the same type of bed bug attracting device. Based on the determined efficiency parameter improved pest control strategies can be implemented, and an enhanced treatment success rate, shortening of the overall treatment period, as well as a reduced risk of returning infestation in the treated space can be obtained.

Another advantageous effect of monitoring solutions presented herein is that if the determined efficiency parameter shows that the infestation is not decreasing or being dealt with as expected or desired, additional measures can be initiated. That the determined efficiency parameter shows that the infestation is not decreasing or being dealt with as expected or desired may mean that the efficiency parameter indicates that the number of bed bugs is not developing as expected, e.g. that the captured number over time is not decreasing or the increase in captured bed bugs does not seem to level out after an expected amount of time, or that the number of captured bed bugs does not follow a pattern learnt from of previous treatments with similar treatment circumstances. Another example of when the determined efficiency parameter shows that the infestation is not decreasing or being dealt with as expected is if the efficiency parameter indicates that the bed bugs appear to have fed even though there are no humans (or other food sources) in the treated space. In this case the bed bugs may e.g. have access to an adjoining space, which of course affects the efficiency of the treatment negatively and probably requires additional actions to be taken, as described herein, to properly deal with the infestation. A further example of when the determined efficiency parameter shows that the infestation is not decreasing or being dealt with as expected is if the efficiency parameter indicates that new adult females keep appearing, meaning that the population is still growing as the females will also have laid eggs that will develop into nymphs. The efficiency parameter may be indicative of the information according to any or all of the above examples. Based on this knowledge obtained from the monitoring of the bed bug treatment session, specifically from the determined efficiency parameter of the treatment session, informed decisions may be made on how to continue the treatment process. For example, if the number of individuals captured does not decrease, the increase does not level out, or it does even seem to increase as indicated by new adult females being captured, treating the infested space may require adjusting the operation of the bed bug attracting device to increase its attraction on the bed bugs, and/or to adding one or more additional bed bug attracting devices to the treated space. If the bed bugs appear to have fed, additional measures may instead, or additionally, include investigating if the bed bugs have access to another, adjoining, space (the next room) where humans reside and, if so, also treat said other space. Alternatively, or additionally, to the above examples, the efficiency parameter may indicate that the density of captured bed bugs, based on input images, is greatest in a specific direction, thereby indicating that this is the direction of the source of the infestation. Knowing this, a further bed bug treating action such as adding another bed bug attracting device, performing an additional manual bed bug treatment by a technician, or the like can be focused on the part of the space (in an close to the indicated direction) where it is most likely that the source of the infestation resides. The efficiency parameter, which is obtained based on information from the monitoring of the bed bug treatment session and comprises or indicates any or all of the above described examples, thereby contributes to increasing or optimizing the treatment efficiency, shortening the overall treatment time, and reducing the risk of a returning infestation in the treated space.

Of course, if the bed bug attracting device used is efficient, this will increase the efficiency and reduce the time of the overall treatment process. Advantageously, the monitoring solutions presented herein may therefore be used in combination with an attracting device and system as described in applicant's own patent application No. 2451256-8, which combines ambient air with CO₂ in a controlled manner and releases the mixture in a gradient across the infested space, covering up to 30 square meters. The release of the mixed fluid, which preferably disperses in multiple directions, mimics human respiration, and ensures that bed bugs, regardless of hiding location, are effectively alerted and drawn to the machine. The fluid is preferably released from the device at different heights, or distances from the surface on which the device is placed, which achieves a gradually increasing gradient of CO₂ concentration as the bed bugs approach the device. Thereby, the interest of the bed bugs is maintained in a more efficient manner, ensuring that as many bed bugs as possible are lured all the way into the trapping element of the device. There is further provided a controllable heating element, which replicates human body warmth, creating a realistic human heat profile for bed bugs to be drawn in by as they approach the device. A processing device in the form of a custom-designed controller controls the mixture of fluid to be emitted, release of the mixed fluid, guided by real-time feedback from an integrated CO₂ sensor. This device and system thereby maintains precise CO₂ levels and gradients according to user-defined settings or preset desired levels, ensuring an effective gradient that consistently attracts bed bugs. The heat output is optionally also adjusted based on feedback from at least one heat sensor, enhancing the device's attractiveness by adding appropriate thermal cues alongside the CO₂ gradient. The device's allure is potent enough to prevent bed bugs from venturing into adjoining rooms during treatment and may in optimal scenarios even be at a level where it surpasses human attraction. However, the monitoring solutions of this disclosure may of course be used in combination with any other type of bed bug attracting device, thereby improving that specific treatment process by achieving a reduced (or at least not unnecessarily prolonged) treatment time, a higher certainty of treatment success, and a reduced risk of a returning infestation in the treated space after the treatment session is ended.

According to a first aspect, the present disclosure relates to a system for monitoring a bed bug treatment session. The system comprises a bed bug attracting device for performing a bed bug treatment, i.e., a bed bug treatment session, in a space where a bed bug infestation is determined or suspected. This space may for example be, but is not limited to, a hotel room, a bedroom, a train compartment, an aircraft compartment, or a room in a nursing home, hospital or prison or other location where humans stay for a period of time, and especially where humans spend the night. The bed bug attracting device comprises a bed bug attractant for luring bed bugs to the bed bug attracting device, and a bed bug trap element for trapping bed bugs lured to the device. The system also comprises a camera system with at least one image capture device being arranged at a bed bug detection area in connection with the bed bug trap element, and a processing device communicatively connected to the camera system. The camera system is configured to capture images of the bed bug detection area at a plurality of time instances during a bed bug treatment session, using the at least one image capture device, and to send input signals indicative of the captured images to the processing device. The processing device is in turn configured to repeatedly receive an input signal indicative of at least one image, each image being captured at a defined time instance, from the camera system. In response to each received image, the processing device is configured to process the image to detect bed bugs present in the bed bug detection area, and to determine the number of detected bed bugs in the bed bug detection area at the defined time instance. The processing device is further configured to determine an efficiency parameter of the bed bug treatment session, based on the number of detected bed bugs present in the bed bug detection area at the defined time instances.

Suitably an efficiency parameter of the bed bug treatment process can thereby be determined, in real time, based on recognition of infestation patterns through analysis of captured images that depict bed bugs captured in a bed bug trapping element of a bed bug attracting device at different time instances during the treatment session. Thereby, improved knowledge on how the treatment session is progressing is obtained. Based on the determined efficiency parameter, informed decisions leading to improved pest control strategies can further be implemented, and an enhanced treatment success rate, shortening of the overall treatment period, and a reduced risk of returning infestation in the treated space can be obtained, thereby potentially benefiting property managers, pest control companies, hospitality businesses etc. Ultimately, this also contributes to public health and environmental sustainability.

The system may preferably comprise a first trained artificial neural network (ANN) configured to detect bed bugs present in the bed bug detection area and the number of detected bed bugs in the bed bug detection area at each defined time instance based on the captured images. Suitably, the accuracy of the detection and counting of bed bugs can be further improved by the use of a trained ANN compared to common image processing techniques. In particular, the accuracy of the trained ANN will increase over time as the training of the ANN progresses. In this embodiment, the processing device is configured to detect bed bugs present in the bed bug detection area and determine the number of detected bed bugs present in the bed bug detection area at the defined time instance, tᵢ, by, in response to each received image: provide the image as input to the first ANN and receive an output from the first ANN indicative of the number of detected bed bugs present in the bed bug detection area at the defined time instance, tᵢ. The processing device or the first ANN may further be configured to determine the efficiency parameter of the bed bug treatment session by determining an accumulated number of bed bugs captured since the beginning of the current treatment session, wherein the output from the first ANN is indicative of said accumulated number of bed bugs instead of, or in addition to, the number of bed bugs at the defined time instance, tᵢ.

Suitably, the processing device and/or the first ANN can thereby provide detailed insights into infestation severity, status of the infestation and the current treatment, and the treatment efficiency based on the number and/or accumulated number of bed bugs captured over time, enabling or providing basis for determining the efficiency of the treatment, making predictions and/or making informed decisions on treatment approaches as described herein.

Alternatively, or additionally, the processing device, the first ANN or a second ANN may be configured to determine the efficiency parameter of the bed bug treatment session by determining a trend of the development of the bed bug infestation over time based on the number of detected bed bugs at the defined time instances and/or the accumulated number of bed bugs at the defined time instances.

Suitably, the processing device, the first ANN or the second ANN can thereby provide further improved insights into infestation severity, status of the infestation and the current treatment, and the treatment efficiency based on the trend of the development of the bed bug infestation over, enabling or providing even further improved basis for determining the efficiency of the treatment, making predictions and/or making informed decisions on treatment approaches as described herein.

The processing device, the first ANN or the second ANN may then be configured to determine if the bed bug treatment session is completed or predict a time when the bed bug treatment session is expected to be completed, based on a comparison of the determined trend of the development of the bed bug infestation over time and historical data obtained from a storage device such as a non-volatile data carrier, memory, database or the like comprised in or connected to the system.

The historical data may comprise information on the operation of the bed bug attracting device, including levels of attractant or attractant components emitted at different times during the current treatment session, concentration of attractant or an attractant component in or around the bed bug attracting device, and/or information on emission cycles used during previous treatments. Preferably the historical data also comprises information regarding at least one previous treatment using the same or a similar type of bed bug attracting device and science based knowledge of bed bug behavior. Information regarding at least one previous treatment may include determined efficiency parameters, comprising or indicating information such as values or measurements from at least one and preferably multiple previous treatment sessions, the number of bed bugs captured at specific time instances or accumulated over time during said at least one previous treatment session, a trend of development of the bed bug infestation over time of said at least one previous treatment session, previous predictions of when each previous bed bug treatment session was expected to be completed, and/or the actual time each previous bed bug treatment session was determined to be completed. The knowledge on bed bugs behavior may advantageously include feeding behavior and knowledge regarding secondary population waves based on detected adult female bed bug individuals and/or nymphs. Suitably, based on the comparison of the determined trend of the development of the bed bug infestation over time and the historical data, a reliable determination or prediction with high accuracy can therefore be made on when the current bed bug treatment session is completed or expected to be completed. If the determination or prediction is made using the processing device, a satisfactory level or accuracy is achieved that considerably exceeds any guess made by only inspecting the result of a bed bug trapping element or terminating a treatment session after a determined amount of time, as are current practices today. By the monitoring solutions of the present disclosure an enhanced treatment success rate, shortening of the overall treatment period, as well as a reduced risk of returning infestation in the treated space is thereby achieved compared to previous bed bug treatment solutions. If the determination or prediction is made using a trained ANN, such as the first or a second trained ANN. the accuracy of the determination or prediction can be even further improved over time, as the trained ANN is fed more historic treatment session data.

In some embodiments, the processing device is further configured to provide an output signal. The output signal may indicate the determined efficiency parameter of the bed bug treatment session. Alternatively, or additionally, the output signal may indicate that the bed bug treatment session is completed, or the predicted time when the bed bug treatment session is expected to be completed. The system may in these embodiments comprise an output device configured to present the information of which the output signal is indicative in a human perceivable, e.g. visible, and/or audible, form to a user or operator of the system, e.g. via any suitable known type of user interface comprised in the output device.

Suitably, the user or operator of the system can thereby obtain information on the determined efficiency parameter of the current treatment and is thus enabled to make informed decisions on how to best proceed with the treatment based on the obtained information.

The bed bug trap element may be configured to stop bed bugs from leaving the bed bug detection area once they have entered it. The bed bug trap element may in this case comprise a deadfall trap, a sticky trap, an insecticide, a viscous liquid, or any combination thereof.

By stopping the bed bugs from leaving the bed bug detection area once they have entered it, the accuracy in counting the number of captured bed bugs, i.e. that are attracted to the bed bug attracting device and that enter the trap, is greatly increased. Also the accuracy in a determined accumulated number of captured bed bugs is similarly increased. As a consequence the efficiency parameter determination, which is at least partially based on the number or accumulated number of captured bed bugs, will be improved. This in turn leads to improved trend determination and improved determination of whether the bed bug treatment session is completed or prediction of a time when the bed bug treatment session is expected to be completed, in embodiments that include such determinations and/or predictions.

If the bed bug attracting device is configured to emit an attractant in a controllable manner, e.g. but not limited to emitting a fluid comprising CO₂ and optionally emitting heat as in the applicant's own patent application No. 2451256-8, or alternatively or additionally emitting bed bug pheromones, human sweat components and/or other organic chemicals that act as bed bug lures, the processing device may be configured to define at least one emission cycle and controlling the emission of the attractant from the bed bug attracting device based on the defined at least one emission cycle. Each emission cycle is preferably defined to include a start point where emission of an attractant is initiated and/or increased, and an end point where the emission of the attractant is caused to stop and/or decrease. Suitably, the emissions of attractant by the bed bug attracting device are thereby controllable.

Advantageously, the emissions can then, e.g., be concentrated to time intervals when the bed bugs are known to be most active, leading to increased efficiency in luring and capturing bed bugs, i.e. efficiency of treatment, as well as increased efficiency in the use of the attractant and thereby reduced waste. In cases where the emitted attractant comprises components indicative of human presence or bed bug presence in the treated space, such as CO₂, heat, human sweat components, bed bug pheromones, or the like, the emissions can be controlled to emit attractant according to the at least one emission cycle such that it mimics a human being or bed bugs being present in the space several times per day/night, with intermittent periods where there is no emission of attractant to clear the space, i.e. lower the concentration level of attractant/attractant components to no longer mimic a human or bed bug presence. If the attractant mimics human presence, e.g. comprising CO₂ and/or heat, the emission is preferably controlled to mimic a human falling asleep in the space, as bed bugs are especially drawn to this. Bed bugs react to chances in the concentration of attractant, and will lose interest or lose the sense of direction of the bed bug attracting device if the concentration in the space no longer changes or is saturated. Suitably, by controlling the bed bug attracting device to emit attractant according to the described pattern to "chock" the bed bugs with raised concentration of attractants at several consecutive time instances with lower concentrations in between, more bed bugs are lured to the device compared to, e.g., if a human goes to sleep for the night in the space, or if a bed bug attracting device emits attractant evenly. To determine when a new emission cycle (e.g. mimicking a human person falling asleep in the space, or using another attractant that lures bed bugs such as bed bugs pheromones or the like) should be initiated after a preceding emission cycle has been performed, at least one sensor as described herein may be configured to measure the attractant level/levels in the treated space, e.g. at the bed bug attracting device. Thereafter, the processing device is configured to receive the measured value/values and to compare it/them to reference value/values. The reference value/values is/are set sufficiently lower than the level/levels during emission to make a subsequent emission cycle impactful. In other words, the reference value/values indicate that the space has been cleared out again so that a new emission cycle will cause the bed bugs to react again and draw them towards the bed bug attracting device. The processing device is then configured to initiate another emission cycle if the measured level/levels is/are equal to or lower than the reference value/values. Controlling the emission of attractant in these manners hence reduces the total treatment time, since the bed bugs are lured and captured more efficiently.

A more efficient use of the attractant, obtained by the embodiments above, provides the additional benefit that the times that a human will have to enter the treatment space to refill the attractant is reduced.

The processing device may further be configured to determine that an adjustment of the operation of the bed bug attracting device should be made and what the adjustment should include, based on a set of input parameters including a selection of the image input signal, at least one sensor input signal indicative of temperature, concentration of attractant and/or other relevant properties measured in or at the bed bug attracting device, historical data stored in a memory of the system, output from the first trained ANN, and/or user input from a user interface of an input device integrated in or communicatively connected to the system. After determining an adjustment, the processing device may be configured to prompt an operator of the system, via a user interface of an input device comprised in or connected to the system, to adjust the operation of the bed bug attracting device, including emission of the bed bug attractant, based on the determined adjustment. Alternatively, or additionally, the processing device may be configured to generate a first control signal configured to control the bed bug attracting device to adjust its operation, including emission of the bed bug attractant, based on the determined adjustment. The processing device may then be configured to control the bed bug attracting device based on the first control signal, wherein at least one component of the bed bug attracting device is correspondingly controllable in response to receiving said first control signal.

Suitably, the processing device can thereby use the set of input parameters to determine if the emission of attractant could be adjusted to increase the efficiency of the bed bug attracting device and thereby the bed bug treatment. The processing device can thereafter advantageously automatically implement the adjustment, thereby increasing the efficiency of the treatment in real time, or prompt a user to implement the adjustment needed.

According to a second aspect of the present disclosure, the object is achieved by a computer-implemented method for monitoring a bed bug treatment session by a system comprising a bed bug attracting device for performing the bed bug treatment in a space where a bed bug infestation is determined or suspected, a camera system, and a processing device communicatively connected to the camera system. The bed bug attracting device comprises a bed bug attractant and a bed bug trap element. The camera system comprises at least one image capture device, being arranged at a bed bug detection area in connection with the bed bug trap element. The method comprises repeatedly capturing, using the at least one image capture device of the camera system, images of the bed bug detection area at a plurality of time instances, during a bed bug treatment session and repeatedly sending input signals indicative of the captured images from the camera system to the processing device. The method further comprises repeatedly receiving, by the processing device, at least one image captured at a defined time instance, tᵢ, from the camera system. In response to each received image the method comprises, by the processing device: detecting bed bugs present in the bed bug detection area based on the received image; and determining the number of detected bed bugs in the bed bug detection area at the defined time instance, tᵢ. The method finally comprises determining, by the processing device, an efficiency parameter indicating the efficiency of the bed bug treatment session based at least on the number of detected bed bugs present in the bed bug detection area at the defined time instances, t_{(1..N)}.

In some embodiments, the step of for each received image detecting bed bugs present in the bed bug detection area may comprise detecting bed bugs by means of a first trained artificial neural network, ANN. Determining the number of detected bed bugs in the bed bug detection area at the defined time instance, tᵢ then comprises determining the number of said detected bed bugs by means of the first trained ANN. The first trained ANN is in this case configured to detect bed bugs present in the bed bug detection area and determine the number of detected bed bugs in the bed bug detection area at the defined time instance, tᵢ, based on the received image.

Determining the efficiency parameter may comprise determining an accumulated number of bed bugs captured since the beginning of the current treatment session. In some embodiments, determining the efficiency parameter comprises determining a trend of the development of the bed bug infestation over time based on the number of detected bed bugs at the defined time instances t_{(1..N)} and/or the accumulated number of bed bugs at the defined time instances t_{(1..N)}. The determination may in any embodiment be performed using the processing device, the first ANN or a second ANN.

The method may further comprise determining if the bed bug treatment session is completed by comparing the determined trend of the development of the bed bug infestation over time and historical data obtained from a non-volatile data carrier comprised in or connected to the system. Alternatively, or additionally, the method may comprise predicting a time, t_{PRED}, when the bed bug treatment session is expected to be completed, by comparing the determined trend of the development of the bed bug infestation over time and historical data obtained from a non-volatile data carrier comprised in or connected to the system. The determination may be performed using the processing device, the first ANN or a second ANN.

The method may comprise providing, by the processing device, an output signal indicative of the determined efficiency parameter, and/or indicating that the bed bug treatment session is completed, and/or indicating the predicted time, t_{PRED}, when the bed bug treatment session is expected to be completed.

The method may comprise defining, by the processing device, at least one emission cycle and controlling, by the processing device, an emission, or emissions of the bed bug attractant from the bed bug attracting device based on the defined at least one emission cycle.

The method may comprise determining, by the processing device, an adjustment of the operation of the bed bug attracting device, based on the determined efficiency parameter and historical data. In this embodiment, the method according to claim 20, may further comprise prompting, by the output device, an operator of the system to adjust the operation of the bed bug attracting device based on the determined adjustment. Alternatively, or additionally, the method may comprise generating a first control signal configured to control the bed bug attracting device to adjust emission of the bed bug attractant based on the determined adjustment. The method may then also comprise controlling the bed bug attracting device, by the processing device, based on the generated first control signal.

According to a third aspect of the invention, the object is achieved by a computer program loadable into a non-volatile data carrier communicatively connected to a processing unit. The computer program includes software for executing any one of the method embodiments according to the second aspect when the program is run on the processing unit.

According to a fourth aspect of the invention, the object is achieved by a non-volatile data carrier containing the computer program according to the third aspect.

Any advantage described in connection with an embodiment of one aspect of the invention is equally applicable to corresponding embodiments of any other aspect of the invention.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
Fig. 1 schematically discloses a system for monitoring a bed bug treatment session according to one or more embodiments of the present disclosure;
Fig. 2 illustrates the general principle according to which the ANN may be trained according to one embodiment of the invention;
Fig. 3 schematically discloses a block diagram of a processing device according to one embodiment of the present disclosure;
Fig. 4 discloses a flow chart showing a method according to an embodiment of the present disclosure;
Fig. 5 discloses a flow chart showing a method according to different embodiments of the present disclosure;
Fig. 6 is an example of an image of a detection area; and
Fig. 7 schematically discloses a camera system arranged to capture images of a detection area.

### DETAILED DESCRIPTION OF EXAMPLE EMBODIMENTS OF THE INVENTION

The present disclosure provides solutions for monitoring and improving the efficiency of bed bugs treatment by using information regarding the number of captured bed bugs at defined time instances during a current treatment session, obtained in real time from a camera system depicting a capturing and detection area at a bed bug attracting device. By the information obtained, a reliable measure of the efficiency of the current treatment session can be determined, in real time. The monitoring information can also be used as a basis for informed decisions on how to proceed, end or adjust the treatment session, or to predict a time when the treatment session will be completed.

In different embodiments presented herein, the basis for determining efficiency or the basis for forming any of the informed decisions regarding the continuation of the current treatment session and/or prediction of when the treatment session will be completed also includes a selection of information on the number of bed bugs caught over time, possibly in combination with how the chosen attractant (e.g. CO₂ or a bed bug pheromone) or attractant components (e.g. CO₂ and heat) of the bed bug attracting device (or a similar bed bug attracting device) was/were emitted during that time (at specified time instances or during a time interval), and/or identified trends in the development of the current infestation, i.e. number or accumulated number of, and possibly also types of, bed bugs caught over time. The basis for determining the efficiency of the current treatment or the basis for forming any of the informed decisions regarding the continuation of the current treatment session and/or predicting the remaining time of the current session (i.e. the time until the infestation is predicted to be dealt with) may also comprise information, i.e. historical data, on any of the kinds described above relating to previous treatment sessions that is fed back to the system to further improve the efficiency determination, basis for decision on how to proceed with the current treatment session, and/or prediction of the end time of the current treatment session. The historical data may thus comprise information on the operation of the bed bug attracting device, including levels of attractant or attractant components emitted at different times during the current treatment session, concentration of attractant or at least one attractant component in or around the bed bug attracting device, and/or emission cycles performed during previous treatment sessions, preferably in combination and also connected to the results of the treatment. Preferably the historical data also comprises information regarding at least one previous bed bug treatment session performed using the same or a similar type of bed bug attracting device, and also science based knowledge of bed bug behavior. Information regarding at least one previous bed bug treatment session may include determined efficiency parameters, values or parameters from at least one and preferably multiple previous treatment sessions, the number of bed bugs captured at specific time instances or accumulated over time during said at least one previous treatment session, a trend of development of the bed bug infestation over time of said at least one previous treatment session, previous predictions of when each previous bed bug treatment session was expected to be completed, and/or the actual time each previous bed bug treatment session was determined to be completed, and operational parameters of the bed bug attracting device such as emission of attractant or attractant components at different times during said previous bed bug treatment session(s). The knowledge on bed bugs behavior may advantageously include feeding behavior and knowledge regarding secondary population waves based on detected adult female bed bug individuals and/or nymphs.

The solutions presented herein thereby achieve a reduced (or at least optimized, i.e. not unnecessarily prolonged) treatment time, a higher certainty of treatment success, and a reduced risk of a returning infestation in the treated space compared to prior solutions. This not only benefit those directly dealing with infestations but also contribute to public health and environmental sustainability.

The present disclosure is developed in more detail below referring to the appended figures which show examples of embodiments. The disclosure should not be viewed as limited to the described examples of embodiments. Like numbers refer to like elements throughout the description.

The terminology used herein is for the purpose of describing particular aspects of the disclosure only and is not intended to limit the invention. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which this disclosure belongs.

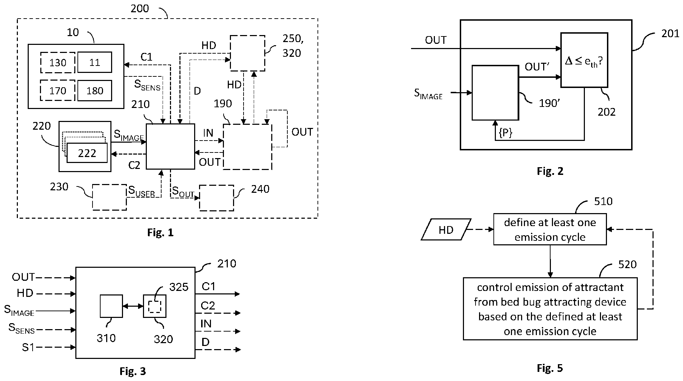

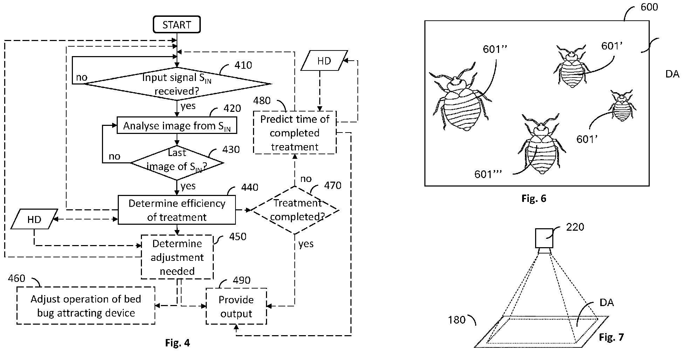

The invention will first be described in connection with Fig. 1 in connection with Figs. 6 and 7.

**Fig. 1** shows a schematic illustration of a system 200 for monitoring a bed bug treatment session according to one or more embodiments of the present disclosure.

The system 200 comprises a bed bug attracting device 10 for performing a bed bug treatment in a space where a bed bug infestation is determined or suspected, a camera system 220, comprising at least one image capture, imaging, or image capturing, device 222, and a processing device 210 communicatively connected to the camera system 220. The bed bug attracting device 10 may also be referred to as a device for attracting bed bugs. The space where a bed bug infestation is determined or suspected may for example be, but is not limited to, a hotel room, a bedroom, a train compartment, an aircraft compartment, or a room in a nursing home, hospital or prison or other location where humans stay for a period of time. The bed bug attracting device 10 comprises a bed bug attractant 11, also referred to herein as an attractant 11, and a bed bug trap element 180. The bed bug attractant may comprise a selection or combination of anything that attracts bed bugs, e.g. components that simulate human presence such as CO₂, heat (at body heat temperature) or human sweat components, and/or bed bug pheromones, and/or other organic chemicals that function as bed bug lures. The camera system 220, comprising the at least one image capture device 222, is arranged at a bed bug detection area DA in connection with the bed bug trap element 180. Thereby, the camera system 220 is configured to capture images of the bed bug detection area DA. A schematic example of the camera system 220, here exemplified with just one image capture device 222 for ease of illustration, arranged at and depicting a bed bug detection area DA in connection with a bed bug trap element 180 is shown in **Fig. 7****.** The bed bug trap element 180 is preferably configured to stop bed bugs from leaving the bed bug detection area DA once they have entered it, whereby monitoring of how many bed bugs have been caught by the trap is facilitated and all the determinations and predictions described in here that are based on the detected bed bugs is made significantly more reliable. The bed bug trap element 180 can be of any suitable kind known in the art, for example comprising a deadfall trap, a sticky trap, an insecticide, a viscous liquid, or any combination thereof. The bed bug detection area DA may in any of these embodiments have a sticky surface that immobilizes bed bugs that enter it. Thereby, it is easier to identify and count bed bugs caught in the trap and also to identify which bed bugs are new arrivals since the last time a picture was taken of the detection area DA. Alternatively, the bed bug trap element 180 may suitably be connected to a heater configured to heat the bed bug trap element 180 such that the bed bugs captured therein die. Said heater may be configured to heat the bed bug trap element 180 evenly, and/or to heat selected areas such as the outer perimeter first, to lure the bed bugs into the center of the bed bug detection area DA. By heating the outer perimeter, detection of the bed bugs in the captured images is facilitated as the bed bugs are less likely to be at the outer edges of the bed bug detection area DA when an image is captured. Said heater may be controllable, and processing device 210 may be configured to control the heater, to heat the bed bug detection area DA if the number of bed bugs detected (according to embodiments herein) at a certain time instance exceeds a preset threshold, or a set time after each emission according to the set emission cycle(s), or at preset time intervals.

To further facilitate the identification of bed bugs in images captured by the camera system 220, the color of the detection area may be chosen to white or a light color, since this contrasts well with the color of bed bugs, thus making such bed bugs easier to identify.

The camera system 220 is configured to capture images 600 of the bed bug detection area DA at a plurality of time instances, t_{(1..N)}, during a bed bug treatment session, using the at least one image capture device 222, and to send image input signals S_{IMAGE} indicative of the captured images 600 to the processing device 210. The plurality of time instances for capturing images during the bed bug treatment process may be preset, such that images 600 are captured at regular time intervals, according to another preset pattern, continuously, and/or such that images are captured in response to manual input, such as a user input signal S_{USER}, from a user interacting with a user interface of an input device 230 communicatively connected to the processing device 210. The processing device 210 is in turn configured to repeatedly receive an image input signal S_{IMAGE} indicative of at least one image 600ᵢ, each image 600ᵢ being captured at a defined time instance, tᵢ, from the camera system 220. In response to each received image 600ᵢ, the processing device 210 is configured to process the image 600ᵢ to detect bed bugs 601, 601', 601" present in the bed bug detection area DA, and further to determine the number of detected bed bugs in the bed bug detection area DA at the defined time instance, tᵢ. The processing device 210 is further configured to determine an efficiency parameter indicative of the efficiency of the bed bug treatment session, based on the number of detected bed bugs present in the bed bug detection area DA at the defined time instances, t_{(1..N)}.

It is noted that in being configured to process the image 600ᵢ to detect bed bugs 601, 601', 601" present in the bed bug detection area DA, and further to determine the number of detected bed bugs in the bed bug detection area DA at the defined time instance, tᵢ, the processing device 210 is configured to detect if there are no bed bugs in the image, or if there are bed bugs in the image and in that case how many. If there are no bed bugs in an image at a certain time instance, this is useful information for determining the efficiency and progress of the treatment process.

As illustrated in Fig. 1, the processing device 210 may further be configured to generate a second control signal C2 configured to control the capturing of images by the camera system 220 according to any setting described above, i.e. preset and stored in the memory or manually input. Thereby, the image capturing settings of the camera system 220 may advantageously be controlled in response to said second control signal C2. The second control signal C2 may in some embodiments be generated in response to manual input received in the processing device 210 from the input device 230.

In a preferred embodiment the system 200 comprises a first trained artificial neural network, ANN, 190 configured to detect bed bugs present in the bed bug detection area DA and the number of detected bed bugs in the bed bug detection area DA at each defined time instance, tᵢ based on an input image 600ᵢ. In this embodiment, the processing device 210 is configured to detect bed bugs 601, 601', 601" present in the bed bug detection area DA, and determine the number of detected bed bugs present in the bed bug detection area DA at the defined time instance, tᵢ, by, in response to receiving an image input signal S_{IMAGE}, provide each image 600ᵢ as input IN to the first trained ANN 190 and obtain an output OUT from the first ANN 190 indicative of the number of detected bed bugs present in the bed bug detection area DA at each defined time instance, tᵢ.

An illustrative example of an image 600 captured at a time instance during a treatment session is shown in Fig. 6. In the example image 600 of Fig. 6 there are four bed bugs present. It is noted that the detection of bed bugs that the processing device 210 is configured to perform may comprise simply identifying any bed bugs present in the image. It may additionally comprise categorizing the identified bed bugs into different classes that are indicative of different stages of a bed bug life cycle and/or the sex of the bed bug. During their life cycle, bed bugs go from eggs to nymphs (1^{st} to 5^{th} stage nymphs) to adults. Of course, eggs cannot enter the bed bug trapping element, so the detection here focusses mainly on nymphs and adult bed bugs. Detecting female bed bugs is important as these are the individuals that, if left uncaptured, may cause the bed bug population to keep increasing in number. Fig. 6 illustrates the presence of two nymphs 601', which based on their comparably small size can be determined to be in nymph stages, and two adult bed bugs 601", 601"', which due to their larger size will be categorized as adults. The two adult bed bugs are quite similar in length, but the bed bug 601" on the left is wider than the bed bug 601‴ on the right. The bed bug 601" on the left has the length and width characteristics of a female bed bug, while the bed bug 601‴ on the right has the length and width characteristics of a male bed bug. In some embodiments, the processing device 210 may further be configured to determine the sex of any detected adult bed bug. The categorization of detected bed bugs (nymph, adult, possibly also sex) is typically performed based on detecting size (length, width) of each bed bug and may also include other known bed bug features detectable from the image 600, whereafter the detected features are compared to reference values and intervals for the length, width and possible other features known to be indicative to the different life stages of a bed bug. The reference values or intervals may for example be in the form of a look-up-table and they may be received or retrieved from a storage device such as a non-volatile data carrier such as a database or other memory device 250, 320 communicatively connected to the processing device 210. Alternatively or additionally to the processing device 210 performed the detection and counting of bed bugs, these steps may instead be performed by the first trained ANN 190, which is advantageous since a trained ANN, especially after having received enough training on relevant reference data (prelabelled images of bed bugs) will have a very high accuracy in its detection and determination. The categorization of detected bed bugs may further include, and the processing device 210 and/or the first trained ANN 190 may be configured to, determining if each bed bug has fed recently or not, by comparing the color of each bed bug to reference values for colors of bed bugs that have fed more or less recently. This may be relevant to know if, e.g., the bed bugs that are captured have recently fed although there is no supply of food in the treatment space. In that case, one may suspect that the bed bugs have access to another space where humans reside, which means that the infestation will not decrease using only the present setup of bed bug attracting device(s). This affects the determination of the efficiency of the treatment and makes it hard or uncertain to predict when the infestation will be dealt with. Actions triggered by such a find may, e.g. include adjusting the emissions of attractant 11 from the bed bug attracting device 10 for a period of time to draw all bed bugs to the treatment space, investigating nearby spaces to identify where the bed bugs feed and close off that space or place an additional bed bug attracting device in that space. In each of these scenarios, the processing device may be configured to, and the method described herein may comprise, generating an output signal S_{OUT} presenting information about the findings to a user and/or prompt the user to take action to solve an issue, via the user interface of the input device 230 or an output device 240 as described herein.

The processing device 210, the first trained ANN 190, or a second trained ANN, may alternatively or additionally be configured to determine an accumulated number of bed bugs captured since the beginning of the current treatment session and use the accumulated number as basis for determination of the efficiency parameter. Of course, the trap may have been emptied during the current treatment session and in this case this is taken into consideration so that the total accumulated number of captured bed bugs is determined. If categorization of the identified bed bugs into different classes has been performed, the processing device 210, the first trained ANN 190, or a second trained ANN may also be configured to determine the accumulated number of bed bugs of at least one such class, for example the number of adult females or nymphs, that have been captured from the beginning of the current treatment session, and base the efficiency parameter determination on this more detailed information.

Alternatively, or additionally, to the above examples, the processing device 210, the first trained ANN 190, or a second trained ANN, may be configured to determine a density of captured bed bugs, based on bed bugs detected in at least one captured image 600 in different defined sections of the bed bug detection area DA, and use the density of bed bugs in the different sections of the bed bug detection area DA as basis for determination of the efficiency parameter. The processing device 210 is in this embodiment configured to determine the direction of the source of the infestation based on which defined section of the bed bug detection area DA has the highest density of captured bed bugs. In this embodiment, the bed bug trap element 180 must comprise an element that immobilizes the bed bugs once they enter the bed bug detection area DA, or in another way that forces the bed bugs to remain in a defined section of the bed bug detection area DA after entering it, for the direction determination to be reliable. Having knowledge of the most likely direction of infestation, a further bed bug treating action such as adding another bed bug attracting device, performing an additional manual bed bug treatment by a technician, or the like can be focused on the part of the space (in an close to the indicated direction) where it is most likely that the source of the infestation resides.

Alternatively, or additionally, to the efficiency parameter determination embodiments described above, the processing device 210, the first trained ANN 190, or the second trained ANN, may be configured to determine a trend of the development of the bed bug infestation over time based on the number of detected bed bugs at the defined time instances t_{(1..N)} or the accumulated number of bed bugs at the defined time instances t_{(1..N)}, and to then determine the efficiency parameter based on the determined trend. The trend may for example show that the number of captured bed bugs decreases over time, that the number increases, or that the number remains essentially unchanged over time. If the number of captured bed bugs decreases over time, this may be interpreted as the treatment having a high efficiency and that the infestation is being dealt with according to plan. Should there be a negative derivative in the number of bed bugs captured over time in combination with the number of captured bed bugs at the present time instance (counted in a current image or derived from the current image and the accumulated number of captured bed bugs) being under a preset threshold value indicative of that the bed bug infestation is almost dealt with, i.e. that the bed bugs are almost gone. From this information, it can be concluded that the bed bug treatment is efficient. This information can also be used to make a determination or prediction regarding the estimated end time of the bed bug treatment session, as described below. If the number of captured bugs does not decrease over time, or even increases, this may be interpreted as the treatment having a lower efficiency and that the infestation is not being dealt with according to plan.

The processing device 210 may also be configured to define at least one emission cycle and to control an emission of the bed bug attractant 11 from the bed bug attracting device 10 based on the defined at least one emission cycle.

As a standard value, the emission cycle or cycles may be preset and the processing device 210 may be configured to control the bed bug attracting device 10 to emit attractant 11 according to the preset, standard pattern, cycle that is based on knowledge on bed bug activity over the hours of the day and night and optimized to emit more attractant during times when the bed bugs are predicted to be active and less or none during times when the bed bugs not predicted to be active based on general knowledge of bed bug behavior. Advantageously, the emissions are then concentrated to time intervals when the bed bugs are known to be most active, leading to increased efficiency in luring and capturing bed bugs, i.e. efficiency of treatment, as well as increased efficiency in the use of the attractant and thereby reduced waste.

In cases where the emitted attractant comprises components indicative of human presence or bed bug presence in the treated space, such as CO2, heat, human sweat components, bed bug pheromones, or the like, the at least one emission cycle can be configured to mimic a human being or bed bugs being present in the space, and the processing device 210 can be configured to control the bed bug attracting device 10 to emit attractant 11 according to such an emission cycle several times per day/night, with intermittent periods where there is no emission of attractant to clear the space, i.e. lower the concentration level of attractant/attractant components to no longer mimic a human or bed bug presence. If the attractant 11 is chosen to mimic human presence, e.g. comprising CO₂ and/or heat, the processing device 210 is preferably configured to control the emissions to mimic a human falling asleep in the space, as bed bugs are especially drawn to this. Suitably, by controlling the bed bug attracting device 10 to emit attractant according to the described pattern, "chocking" the bed bugs with raised concentration of attractants at several consecutive time instances with lower concentrations in between, more bed bugs are lured to the device 10 compared to, e.g., if a human goes to sleep for the night in the space, or if a bed bug attracting device emits attractant evenly. To determine when a new emission cycle (e.g. mimicking a human person falling asleep in the space, or using another attractant that lures bed bugs such as bed bugs pheromones or the like) should be initiated after a preceding emission cycle has been performed, at least one sensor 130, 170 as described herein may be configured to measure the concentration or level of attractant in the treated space, e.g. at or around the bed bug attracting device 10. Thereafter, the processing device 210 is configured to receive the measured value/values and to compare each measured value to a preset reference value. The reference value/values is/are set sufficiently lower than the level/levels during emission to make a subsequent emission cycle impactful. In other words, the reference value/values indicate that the space has been cleared out again so that a new emission cycle will cause the bed bugs to react anew and draw them towards the bed bug attracting device. The processing device 210 is then configured to initiate another emission cycle if the measured level/levels is/are equal to or lower than the reference value/values. Controlling the emission of attractant 11 in these manners hence reduces the total treatment time, since the bed bugs are lured and captured more efficiently.

Furthermore, an efficient use of the attractant provides the benefit that the times that a human will have to enter the treatment space to refill the attractant is reduced. Based on the monitoring described herein, especially information gathered from captured images and historical data HD regarding the current treatment session and possibly also previous treatment sessions, the processing device 210 may in this embodiment further be configured to determine at least one time interval during the day and/or night when the bed bugs are increasingly active in the specific space where the treatment is performed, define at least one updated emission cycle that includes emission during each of the determined at least one time interval when the bed bugs are increasingly active, and control the bed bug attracting device based on the defined at least one updated emission cycle to emit attractant only, mainly, or in an increased amount, during said at least one time interval. In another example, if at least one adult female bed bug has been detected in an image captured at a certain time instance, it can be assumed that each detected female bed bug in the image has laid eggs and that within a certain number of days, typically 6-10 days, up to 10 nymphs will have hatched and grown enough to be wandering the space searching for food. In other words, 6-10 days (this can of course be adapted if the bed bugs currently being treated are of a type where this parameter differs) from the capture of each adult female, up to 10 nymphs should be captured using the bed bug attracting device 10 and detected in images of the detection area DA. The number of nymphs may be lower than the number of expected eggs, because if there is no food to be found in the space, some nymphs will not survive long enough to reach the trap of the bed bug attracting device 10. Using the knowledge on when and how many nymphs are to be expected after capture and detection of a female bed bug, the processing device 210, the first trained ANN 190 or the second trained ANN may be configured to define at least one updated emission cycle that includes emission of attractant 11 (continuous or at set times) during the set period of days (herein exemplified as 6-10) after the female bed bug was captured or detected. Preferably, the processing device 210, the first trained ANN 190 or the second trained ANN is then configured to detect and categorize bed bugs in images captured during said set period of days after the female bed bug was captured or detected to determine if the expected trend over time is followed, i.e. if the expected number of nymphs are captured. Based on this, the processing device 210, the first trained ANN 190 or the second trained ANN is then configured to make a determination or prediction regarding the estimated end time of the bed bug treatment session using at least the detection of the expected number of captured nymphs within the set time period as completion criterium. If no nymphs are captured during the expected time period, other information may need to be taken into consideration to explain the deviation. For example, if the treated space has been empty, i.e. no food in the form of humans have been present, for a long time before the current treatment session was initiated, the captured adult female has likely not been able to feed and therefor has not been able to produce any eggs. Based also on this knowledge, conclusions can be drawn on the estimated end time of the bed bug treatment session. In this event it is likely that the estimated end time is updated to be sooner than originally estimated. In contrast, if more adult female bed bugs are captured during the period where the nymphs are expected, this indicates that the infestation is not decreasing and this is taken into consideration for determination or prediction of the estimated end time of the bed bug treatment session. Suitably, based on the comparison of the determined trend of the development of the bed bug infestation over time and the historical data in these manners, a reliable determination or prediction with high accuracy can be made on when the current bed bug treatment session is completed or expected to be completed. Embodiments of determination or prediction regarding the estimated end time of the bed bug treatment session are described further below.

Suitably, the emissions are then optimized to the specific space wherein the treatment is performed and/or the specific infestation being dealt with, thereby being even further concentrated to time intervals when the bed bugs are most active, leading to even further increased efficiency in luring and capturing bed bugs, i.e. efficiency of treatment, as well as even further increased efficiency in the use of the attractant and thereby reduced waste. Additionally, the even more efficient use of the attractant further reduces the times that a human will have to enter the treatment space to refill the attractant.

According to this embodiment of the invention, the processing device, the first trained ANN 190 or the second trained ANN may further be configured to determine a duration of each of the at least one emission cycle and/or the concentration of attractant or attractant components emitted during an emission cycle based on the number or accumulated number of captured bed bugs during the current treatment session, the determined efficiency parameter, the determined trend of the development of the bed bug infestation, historical data, manual input, and/or on predetermined time intervals.

From the obtained efficiency information according to different embodiments herein, informed decisions can be made on how to proceed with the treatment and if anything needs to be done to increase treatment efficiency in terms of adjusting the emission cycle, adding additional bed bug attracting device/devices, investigating neighboring spaces to see if the bed bugs have access to these, etc. In some embodiments, the determined trend can be compared to historical data, in this case typically including knowledge on bed bug life cycles and behavior and knowledge from previous treatments on how long it takes for an infestation to be over based once it reaches a certain point or follows a certain development pattern or previously determined trend, preferably in combination with which emission cycles were used, the efficiency of the current treatment session can be even more reliably determined.

In embodiments where a trend is determined, the processing device 210, the first trained ANN 190, or the second trained ANN may further be configured to determine if the bed bug treatment session is completed. Alternatively, or additionally in the case when the treatment session is not completed, the processing device 210, the first trained ANN 190, or the second trained ANN may be configured to predict a time, t_{PRED}, when the bed bug treatment session is expected to be completed, based on a comparison of the determined trend of the development of the bed bug infestation over time and historical data HD as described herein obtained from a non-volatile data carrier 250, 320 comprised in or connected to the system 200. Thereby, previous predictions and/or patterns learned from previous treatment sessions can be used for making a reliable determination or prediction regarding the expected completion of the current treatment process, i.e. when the infestation is expected to be fully dealt with. Initially, the prediction on whether or not a bed bug treatment session is completed will also be externally validated to ensure that the information fed back to the processing device 210, the first trained ANN 190, or the second trained ANN (i.e. the prediction, the actual result if externally validated, the number of bed bugs captured, any determined trends, and all relevant parameters in the operation of the bed bug attracting device, emission cycles etc., during the treatment session) is correct. However, the more treatment sessions are performed, the more reliable the predictions will become, and external validation will become superfluous.

In an example, the first trained ANN 190 receives an image 600 via an image input signal S_{IMAGE}. From the image input signal S_{IMAGE} the first trained ANN 190 can also derive information on the time instance that the image 600 was captured. In response to the input image 600 and based on the preceding training, the first trained ANN 190 derives information such as "yes, there is/are a bed bug/bed bugs in the image", "the number of bed bugs in the image is 5", and possibly also information such as "this bed bug is an adult male bed bug, that one is a nymph, this one is an adult female" or "there is one adult female and three nymphs" etc. This information is then comprised in the output OUT from the first trained ANN 190. The first trained ANN 190 may also have received a sensor input signal S_{SENS} indicative of temperature, concentration of attractant and/or other relevant properties measured in or at the bed bug attracting device 10. If the measured data of the sensor input signal S_{SENS} has been measured at (or around, depending on system settings and allowable deviations) the same time instance as the image 600 has been captured, the first trained ANN 190 can include this information in the output OUT, as an improved basis for further analysis, determination of efficiency of the current treatment, and optionally prediction and/or determination of if/when the treatment is completed, by the unit that is selected to do such subsequent processing. Based on this gathered information on the current treatment process, the processing device 210, or the first or a second trained ANN, can advantageously also determine a trend of development of the currently treated bed bug infestation over time as described above. There are, as shown herein, many different ways to determine the efficiency of the current bed bug treatment session within the scope of the invention. For example, the efficiency parameter may be determined based on the number of bed bugs bed bugs present in the bed bug detection area DA at a plurality of defined time instances, t_{(1..N)}. From this information, if the number of captured bed bugs (bed bugs present in the bed bug detection area DA) is large at the beginning of the treatment session and then decreases over time, it may be derived that the treatment is efficient, and that the infestation is being dealt with as desired. Alternatively, if the number of captured bed bugs (bed bugs present in the bed bug detection area DA) does not decrease over time, or does not decrease at the expected rate, it may be derived that the treatment is not as efficient as desired. Similar efficiency conclusions may be drawn based on information on the accumulated number of bed bugs captured since the beginning of the current treatment session. If a trend of the development of the current bed bug infestation over time is determined and compared to historical data HD, it may be derived from such a comparison that the trend of the development of the current bed bug infestation over time matches, or does not match, trends determined for previous treatment sessions. The comparison includes mapping the number of bed bugs captured (in total and/or over time) during the current and previous treatments, and may also include operational parameters such as which emission cycle or cycles were used, etc. The current bed bug treatment session can in this case be determined to be efficient if the trend of the development of the current bed bug infestation over time matches, or follows the pattern of, at least one previous treatment session that was successfully concluded. After that, the processing device 210, or the first or a second trained ANN, can determine that the current bed bug treatment session is completed if a chosen at least one completion criterion is fulfilled, e.g. comprising that the treatment has been performed a set number of days and that the number of bed bugs captured during the last three days is zero, that a zero derivative in the number of bed bugs captured over time was reached and after that no bed bugs have been captured for a set number of days in a row, that first one or more adult females and thereafter an expected number of nymphs and no additional adult females have been captured, and/or that the current bed bug treatment session matches a previous treatment session (the length of the sessions, the number of bed bugs captured, the decrease in number of bed bugs captured over time, the emission cycles used, etc.) and has reached a point wherein the previous treatment session was determined, and preferably externally validated, to be concluded. If the chosen at least one completion criterion is not fulfilled, it is instead determined that the current bed bug treatment session is not completed. In alternative to determining if the current bed bug treatment session is completed, or as a subsequent step if it is determined that the current bed bug treatment session is not completed, the processing device 210, or the first or a second trained ANN, can then predict a time T_{PRED} when the current bed bug treatment session is expected to be completed. The prediction is made based on all available information from the previous steps, including at least a determined trend of the development of the current bed bug infestation over time and information of one or more, preferably a plurality of, previous bed bug treatment sessions. The prediction is then fed back into the system, along with the information on which it was based, to be used to improve future predictions.

The processing device 210 may preferably further be configured to provide an output signal Sₒᵤₜ indicative of the determined efficiency parameter n, and/or indicating that the bed bug treatment session is completed, and/or indicating the predicted time t_{PRED} when the bed bug treatment session is expected to be completed. The system 200 may then also comprise or be connected to an output device 240 configured to receive an output signal Sₒᵤₜ from the processing device 210 and further being configured to provide a graphical representation of the determined efficiency parameter, that the bed bug treatment session is completed, or the predicted time t_{PRED} when the bed bug treatment session is expected to be completed, or other information as indicated by the output Sₒᵤₜ, via a user interface of the output device 240. The determined efficiency parameter included in/indicated by the output signal Sₒᵤₜ may have been determined according to any embodiment described herein, for example based on the accumulated number of bed bugs captured since the beginning of the current treatment process and/or the determined trend of the development of the bed bug infestation over time.

The user interface 240 may also be configured to display or present information on the current bed bug treatment session, including a selection of: the number of captured bed bugs at specific time instances, the accumulated number of bed bugs captured, a determined trend or pattern of the treatment, sensor information showing the operational parameters (parameters affecting the attracting of bed bugs such as level or concentration of attractant 11 emitted, temperature, and the like) of the bed bug attracting device, captured images, historical data HD, currently used emission cycle or cycles, a determined most likely direction of the source of infestation and/or information prompting the user to make adjustment of the operational parameters of the bed bug attracting device or a currently used emission cycle schedule, etc. The input device 230 and the output device 240 may be integrated in one physical unit, or be separate devices.

Advantageously, the processing device 210 may be configured to determine based on the determined efficiency parameter and information available from the monitoring that an adjustment of the operation of the bed bug attracting device 10 is needed to increase the efficiency of the current treatment session. The processing device 210 is then in different embodiments preferably also configured to determine an adjustment of the operation of the bed bug attracting device 10 that should be performed to achieve the desired increased efficiency. The determination is based on a set of input parameters including a selection of: the image input signal S_{IMAGE}, at least one sensor input signal S_{SENS} indicative of temperature, a concentration of attractant 11 and/or other relevant properties measured using sensors 130, 170 in or at the bed bug attracting device 10, historical data HD stored in a memory 250, 320 accessible to the system 200, output OUT from the first trained ANN 190, output from a second trained ANN, and/or user input S_{USER} from a user interface of an input device 230 integrated in or communicatively connected to the system 200. The processing device 210 may then be configured to prompt an operator of the system 200, preferably via a user interface such as the user interface of the input device 230 or the output device 240, to adjust the operation of the bed bug attracting device 10 according to the determined adjustment. Thereby, the desired increased efficiency can be achieved. Alternatively, the processing device may be configured to determine the adjustment of the operation of the bed bug attracting device 10 based on said set of input parameters, and further to generate a first control signal C1 configured to control the bed bug attracting device 10, or controllable components of the bed bug attracting device 10, to adjust the operation of the bed bug attracting device 10 according to the determined adjustment. As a non-limiting example, the monitoring may reveal that an adult female bed bug has been captured. Based on knowledge of bed bugs included in the input IN to the first trained ANN 190 or second trained ANN, or rules set in the system 200 and used by the processing device 210, to determine and implement an adjustment, it can then be derived by the processing device 210, the first trained ANN 190 or the second trained ANN, that the female bed bug has likely laid eggs that will hatch and become nymphs within 10 days. Based on this, the processing device 210, the first trained ANN 190 or the second trained ANN can suitably determine that the emission of the attractant 11 is to be increased or focused on the time when the nymphs are expected. In another non-limiting example the monitoring may show that the bed bugs are inactive during certain times of day in the currently treated space. Based on this, the processing device 210, the first trained ANN 190 or the second trained ANN can suitably determine that the emission of the attractant 11 is to be decreased or turned off during the inactive times every day. By such adjustments, adapted to the current treatment session in real time, the efficiency of the treatment is increased and the use of attractant is optimized.

In some embodiments, if the bed bug attracting device 10 comprises controllable attractant emitting means (valves or the like), the bed bug attracting device 10 may be configured to emit attractant 11 (including emitting different components of attractant individually) according to system settings, based on feedback from sensors 130, 170 measuring parameters of the current treatment session, and/or based on user input via the input device 230.

The trained first ANN 190 may for example be a fully connected multilayer neural network comprising one input layer, one output layer, and at least one hidden layer interconnecting the input and output layers, each of the input, output and at least one hidden layer comprising a respective set of nodes connected to nodes to the respective of neighboring layers via a respective weight. The weights of the first trained ANN 190 have typically been assigned through a training process in which previously generated image input signals S_{IMAGE} indicative of captured images 600 at specified times t from the camera system 220 were used as training data and registered outputs OUT comprising at least registered determinations of the number of bed bugs present in each of the respective images 600, and/or a registered accumulated number of bed bugs during that treatment session up to and including the respective image, were used as reference data. The reference data, i.e. the outputs OUT, may also comprise categorization of the identified bed bugs into different classes and the number or accumulated number of bed bugs of one or more such category, as described herein. Referring now to Fig. **2****,** according to one embodiment of the invention, the weights of the first trained ANN 190 have been determined iteratively via a backpropagation training process {P} executed in a training unit 201. The training unit 201 repeatedly obtains an updated image input signal S_{IMAGE} indicative of at least one captured image 600 from the camera system 220, and the associated registered output OUT associated with said image 600. Based on the image input signal S_{IMAGE}, the ANN under training 190' produces at least one predicted output OUT' for each of the respective images 600, which aims at being sufficiently similar to the registered output OUT associated with respective image 600 of the image input signal S_{IMAGE}. To produce at least one predicted output OUT', the ANN under training 190' analyses the image to identify objects in the image, determines if each identified object is a bed bug or not, in some embodiments classifies the detected bed bugs, and counts them. Many ways of identifying bed bugs in images are known in the art and alternatives for this are not discussed further herein. An evaluation module 202 is then configured to check if a difference Δ between the registered output OUT and the at least one predicted output OUT is less than a threshold value eₜₕ. If the evaluation module 202 finds that said difference Δ is equal to or larger than the threshold value eth, the evaluation module 202 is configured to generate a set of adjustment parameters {P}, which causes one or more of the weights in the ANN to be modified to a respective higher or lower value that are expected to lower the difference Δ. This backpropagation training process continues until a convergence criterion is met. In simplified terms this may be said to occur when the difference Δ becomes smaller than the threshold value eₜₕ. The backpropagation training process, if used, comprises a suitable number of epochs that enables reliable convergence and at the same time avoids overtraining. After the training process has been completed, the ANN under training 190' represents the first trained ANN 190. The number of hidden layers in the trained ANN is at least one.

Alternatively, instead of the trained first ANN 190 being trained using supervised learning in the manner described in connection with Fig. 2, the training process used may be unsupervised, self-supervised or semi-self-supervised. Non-limiting examples of such training processes are contrastive learning and transfer learning, but other options are also applicable, as the skilled person would recognize. If a second or additional trained ANNs are used, each ANN may be configured and be trained in the manner generally described in connection with the first trained ANN 190 herein.

The bed bug attracting device 10 may further comprise or be connected to at least one sensor for measuring relevant parameters (e.g. concentration of attractant, temperature of there is a heater, air flow if there is an airflow device, etc.) related to the emission of attractant 11, in fig. 1 exemplified by two sensors 130, 170. The determination of efficiency of the bed bug treatment session, the trend of development of the infestation over time, the determination or prediction of the completion of the treatment session, and/or the determination of an adjustment of the operation of the bed bug attracting device 10 may be based also on measurements from said sensors, obtained in the processing device 210 either directly from said sensors or from the storage device 250, 320. The measurements may comprise current measurements as well as measurements previously registered and stored as part of the historical data HD in the storage device 250, 320.

As illustrated in Fig. 3, it is generally advantageous if the processing device 210 is configured to effect the above procedure in an automatic manner by executing a computer program. Therefore, the processing device 210 may include at least one processing unit 310 and a memory unit 320, i.e. non-volatile data carrier, storing a computer program 325, which, in turn, contains software for making the at least one processing unit 310 execute the actions mentioned in this disclosure when the computer program 325 is run on the at least processing unit 310.

The processing device 210 contains input interfaces configured to receive the image input signal S_{IMAGE}, at least one sensor input signal S_{SENS} from one or more sensors 130, 170 comprised in or connected to the bed bug attracting device 10 for measuring properties related to the emitted bed bug attractant 11, user input S_{USER} from the input device 230, historical data HD from the storage device 250, 320, and output OUT from the first trained ANN 190 (and possibly at least one further ANN, not shown in the figures). Further, the processing device 210 contains at least one output interface configured to sending data D including data relating to the current treatment session and data obtained from other system units to the storage device 250, 320, provide the input IN to the first trained ANN 190, provide the first control signal C1 to control emissions of attractant 11 by the bed bug attracting device 10, provide a second control signal C2 to control capturing of images by the camera system 220, and provide the output signal S_{OUT} to the output device 240.

In order to sum up, and with reference to the flow diagrams in Figs. 4 and 5, we will now describe the computer-implemented method for monitoring a bed bug treatment session according to embodiments of the present invention. The method is carried out by the processing device 210 and thereto connected system units according to the invention and preferred embodiments thereof. It is noted that any advantages and effects described in connection with embodiments of the system 200 for monitoring a bed bug treatment session herein are equally applicable to the corresponding method embodiments for monitoring a bed bug treatment session.

Turning first to Fig. 4, there is shown a method for monitoring a bed bug treatment session, using a system 200 as described herein comprising a bed bug attracting device 10 for performing the bed bug treatment in a space where a bed bug infestation is determined or suspected, a camera system 220, and a processing device 210 communicatively connected to the camera system 220. The bed bug attracting device 10 comprises a bed bug attractant 11 and a bed bug trap element 180, to lure and capture bed bugs. The camera system 220 comprises at least one image capture device 222 that is arranged at a bed bug detection area DA in connection with the bed bug trap element 180. Thereby, the camera system 220 is arranged to capture images of bed bugs present in the bed bug detection area, i.e. that have entered the bed bug trap element 180. The method comprises:
**In step 410:** Checking if an image input signal S_{IMAGE} has been received in the processing device 210 from the camera system 220.

If an image input signal S_{IMAGE} has been received in the processing device 210 from the camera system 220, this means that images 600ᵢ, depicting the bed bug detection area DA at a defined time instances, tᵢ, during the bed bug treatment session, have been captured using the at least one image capture device 222 of the camera system 220, that the image input signal S_{IMAGE} indicative of the captured images 600 has been generated and sent from the camera system 220 to the processing device 210, and that the processing device 21 has received at least one image 600ᵢ captured at a defined time instance, tᵢ, from the camera system 220 via the image input signal S_{IMAGE}. Preferably, capturing of images 600 and sending and receiving of the image input signal S_{IMAGE} and associated images 600ᵢ are performed repeatedly, at a plurality of time instances, t_{(1..N)} during the bed bug treatment session.

The camera system 220 is configured to capture images 600 of the bed bug detection area DA at a plurality of time instances, t_{(1..N)}, during a bed bug treatment session. The plurality of time instances for capturing images during the bed bug treatment process may be preset, such that images 600 are captured at regular time intervals, according to another preset pattern, continuously, and/or such that images are captured in response to manual input, such as the user input signal S_{USER}, from a user interacting with a user interface of an input device 230 communicatively connected to the processing device 210. The method may comprise generating a second control signal C2 configured to control the capturing of images by the camera system 220, such that the image capturing settings of the camera system 220 may be adjusted in response to receiving said second control signal C2.

If an image input signal S_{IMAGE} has been received in the processing device 210, from the camera system 220, the method continues in steps 420 and 430. Otherwise, the method loops back to step 410.

Steps 420 and 430 below are performed in response to each image 600ᵢ of the received image input signal S_{IMAGE}:
**In step 420:** Detecting bed bugs present in the bed bug detection area DA based on the received image 600ᵢ and determining the number of detected bed bugs in the bed bug detection area DA at the defined time instance, tᵢ.

The image processing of step 420 may be performed by the processing device 210, or by the first artificial neural network (ANN), 190, which is in this case communicatively connected to the processing device 210, or a combination of the two.

In some embodiments, the step of, for each received image 600ᵢ, detecting bed bugs present in the bed bug detection area, DA, comprises detecting bed bugs by means of the first trained ANN, 190, and determining the number of detected bed bugs in the bed bug detection area, DA, at the defined time instance, tᵢ comprises determining the number of said detected bed bugs by means of the first trained ANN 190. The first trained ANN 190 is in these embodiments configured to detect bed bugs present in the bed bug detection area DA and determine the number of detected bed bugs in the bed bug detection area DA at the defined time instance tᵢ based on the received image.

It is noted that detecting bed bugs present in the bed bug detection area DA based on the received image 600ᵢ and determining the number of detected bed bugs in the bed bug detection area DA at the defined time instance, tᵢ includes detecting if there are no bed bugs in the image, or if there are bed bugs in the image and in that case how many. If there are no bed bugs in an image at a certain time instance, this is useful information for determining the efficiency and progress of the treatment process.

**In step 430:** checking, by the processing device 210, if the image processed in step 420 is the last image of the received image input signal S_{IMAGE}.

If the previously processed image is the last image of the received image input signal S_{IMAGE} the method continues in step 440. Otherwise, the method loops back to step 420.

**In step 440:** determining, by the processing device 210, the first trained ANN 190 or a second trained ANN, an efficiency parameter based at least on the number of detected bed bugs present in the bed bug detection area DA at the defined time instances, t_{1..N}.

Determining the efficiency parameter may comprise determining an accumulated number of bed bugs captured since the beginning of the current treatment process. Alternatively, or additionally, determining the efficiency parameter may comprise determining a trend of the development of the bed bug infestation over time based on the number of detected bed bugs at the defined time instances t_{(1..N)} and/or the accumulated number of bed bugs at the defined time instances t_{(1..N)}. The efficiency parameter may also be determined in any manner described in connection with the system 200 herein.

As illustrated in Fig. 4, the method may in different embodiments further include any or all of the optional steps 450, 460, 470, 480 and 490, comprising:
**In optional step 450:** determine if an adjustment of the operation of the bed bug attracting device 10 is needed based on the determined efficiency parameter and historical data HD.

The determination may be made by the processing device 210, or by the first trained ANN 190 or by a second trained ANN, in any manner described in connection with the system 200 herein. Step 450 includes obtaining, i.e. receiving, or retrieving, historical data HD from a storage device, a non-volatile data carrier, a memory such as the memory 250 or 320, a database or the like comprised in or accessible to the system 200. If the information on which the determination is based includes measurements from sensors comprised in or connected to the bed bug attracting device 10 for measuring relevant parameters related to the emission of attractant 11, in fig. 1 exemplified by the two sensors 130, 170, step 450 also includes obtaining such data from said sensors.

If step 450 is performed, the method preferably also includes step 460, comprising:
**In optional step 460:** Adjusting the operation of the bed bug attracting device 10 based on the determined adjustment of step 450.

The adjustment may be performed in any manner described in connection with the system 200 herein.

Step 460 may comprise prompting, by an output device 240, an operator of the system 200 to adjust the operation of the bed bug attracting device 10 based on the determined adjustment. Alternatively, step 460 may comprise generating a first control signal C1 configured to control the bed bug attracting device 10 to adjust the operation of the bed bug attracting device 10, or controllable components thereof, based on the determined adjustment.

**In optional step 470:** determining, by the processing device 210, the first trained ANN 190 or the second trained ANN, if the bed bug treatment session is completed.

The determination may be performed in any manner described in connection with the system 200 herein.

If it is determined that the treatment is not completed, the method loops back to step 410. Before, or in parallel to, step 410 being performed, the method may in this embodiment also comprise the optional step 480 and/or 490.

If it is determined that the treatment is completed, the method ends. Before ending the treatment, the optional step 490 may be performed, in this case relating to the information that the treatment is completed.

**In optional step 480:** predicting, by the processing device 210, the first trained ANN 190 or the second trained ANN, a time, t_{PRED}, when the bed bug treatment session is expected to be completed, by comparing the determined trend of the development of the bed bug infestation over time and historical data (HD) obtained from a memory unit such as a non-volatile data carrier (250, 320) comprised in or connected to the system (200).

The prediction may be performed in any manner described in connection with system 200 herein.

**In optional step 490:** providing, by the processing device 210, an output signal Sₒᵤₜ.

Depending on what has been determined in the preceding method steps, the output signal Sₒᵤₜ may be indicative of one or more of: the determined efficiency parameter; that the bed bug treatment session is completed; and/or the predicted time, t_{PRED}, when the bed bug treatment session is expected to be completed.

Step 490 may include presenting or displaying the information of which the output signal Sₒᵤₜ is indicative to a user via a user interface of the output device 240 connected to the processing device 210. The user interface may be a graphical user interface (GUI) whereby the information of, indicated by, the output signal Sₒᵤₜ may be presented to the user as a graphical representation of the determined efficiency parameter, and/or information regarding the bed bug treatment session being completed or the information on the predicted end time t_{PRED}.

Step 490 may include receiving, in the output device 240, an output signal Sₒᵤₜ from the processing device 210 and providing a graphical representation of the determined efficiency parameter, that the bed bug treatment session is completed, or the predicted time t_{PRED} when the bed bug treatment session is expected to be completed, or other information as indicated by the output signal Sₒᵤₜ, via a user interface of the output device 240. The determined efficiency parameter of the bed bug treatment process included in/indicated by the output signal Sₒᵤₜ may have been determined according to any embodiment described herein. Information included in the output signal Sₒᵤₜ, and thus information that is presented according to method step 490, may include a selection of: the number of captured bed bugs at specific time instances; the accumulated number of bed bugs captured; a determined trend or pattern of the treatment; sensor information showing the operational parameters (parameters affecting the attracting of bed bugs such as level or concentration of attractant 11 emitted, temperature, and the like) of the bed bug attracting device; captured images; historical data HD; currently used emission cycle or cycles; information prompting the user to make adjustment of the operational parameters of the bed bug attracting device or a currently used emission cycle schedule, etc.

In some embodiments, to facilitate the detection of bed bugs in captured images, the method may also include heating the bed bug trap element 180, by a heater, such that the bed bugs captured therein die, and/or to first heat selected areas such as the outer perimeter, to lure the bed bugs into the center of the bed bug detection area DA. The method may in this embodiment include controlling the heater by the processing device 210. This in turn may comprise controlling the heater, by the processing device 210, to heat the bed bug trap element 180 or selected parts thereof if the number of bed bugs detected (according to embodiments herein) at a certain time instance exceeds a preset threshold, or at a set time after each emission according to the set emission cycle(s), or at preset time intervals.

As illustrated in **Fig. 5****,** the method according to any embodiment herein may further comprise:
**In step 510:** defining, by the processing device 210, at least one emission cycle, and
**In step 520:** controlling, by the processing device 210, emission of attractant 11 from the bed bug attracting device 10 based on the defined at least one emission cycle.

Each emission cycle has a starting point where an emission of attractant 11 is initiated or increased in response to a received first control signal C1, and an end point where the emission of attractant 11 is caused to stop or decrease.

Thereby, the method enables controlling the bed bug attracting device to be operated in such a way that different operational cycles can be performed. Each emission cycle may suitably result in the emission of attractant 11 from the device and an increase of attractant concentration around the device. By performing different cycles, and thus cyclically increasing and decreasing the attractant emission from the device based on knowledge of bed bug behavior and knowledge of the infested space, such as when the bed bugs are typically most active and if there are any specific activity pattern connected to the specific space of the current treatment, an improved bed bug attraction is achieved. According to this embodiment of the invention, the method may further comprise, by the processing device, determining a duration of each of the at least one emission cycle and/or the concentration of attractant or attractant components emitted during an emission cycle based on the number or accumulated number of captured bed bugs during the current treatment session, the determined efficiency parameter, the determined trend of the development of the bed bug infestation, historical data, manual input, and/or on predetermined time intervals

Controlling the emission of attractant 11 from the bed bug attracting device 10 may comprise automatically controlling the emissions by generating, by the processing device 210, a first control signal C1 configured to control the bed bug attracting device 10 to emit attractant 11, sending said first control signal C1 from the processing device 210 to the bed bug attracting device 10 and, in response to receiving the first control signal C1, emitting attractant 11 by the bed bug attracting device 10 based on the first control signal C1. If there is more than one component of the bed bug attracting device 10 that regulates emission of the attractant 11, or different components of the attractant, the first control signal C1 may correspondingly comprise more than one separate first control signal C1a, C1b, ..., each being configured to control one of said more than one component of the bed bug attracting device 10 that regulates emission of the attractant 11.

Alternatively, or additionally, controlling the emission of attractant 11 from the bed bug attracting device 10 may comprise prompting a user, via the user interface of the output device 240 or another output device, to manually adjust system settings based on the defined at least one emission cycle.

## Claims

1. A system (200) for monitoring a bed bug treatment session, comprising:
- a bed bug attracting device (10) for performing a bed bug treatment in a space where a bed bug infestation is determined or suspected, the bed bug attracting device (10) comprising a bed bug attractant (11) and a bed bug trap element (180);
- a camera system (220), comprising at least one image capture device (222), being arranged at a bed bug detection area (DA) in connection with the bed bug trap element (180); and
- a processing device (210) communicatively connected to the camera system (220),
wherein the camera system (220) is configured to capture images (600) of the bed bug detection area (DA) at a plurality of time instances, t_{(1..N)}, during a bed bug treatment session, using the at least one image capture device (222), and to send image input signals (S_{IMAGE}) indicative of the captured images (600) to the processing device (210);
wherein the processing device (210) is configured to:
- repeatedly receive an image input signal (S_{IMAGE}) indicative of at least one image (600ᵢ) each being captured at a defined time instance, tᵢ, from the camera system (220); and
- in response to each captured image (600ᵢ) detect bed bugs (601, 601', 601") present in the bed bug detection area (DA), and determine the number of detected bed bugs present in the bed bug detection area (DA) at the defined time instance, tᵢ,
wherein the processing device (210) is further configured to:
- determine an efficiency parameter that is indicative of the efficiency of the bed bug treatment session, based on the number of detected bed bugs present in the bed bug detection area (DA) at the defined time instances, t_{(1..N)}.

2. The system (200) according to claim 1, further comprising a first trained artificial neural network, ANN, (190) configured to detect bed bugs present in the bed bug detection area (DA) and the number of detected bed bugs in the bed bug detection area (DA) at each defined time instance, tᵢ based on an input image (600ᵢ), wherein the processing device (210) is configured to detect bed bugs (601, 601', 601") present in the bed bug detection area (DA), and determine the number of detected bed bugs present in the bed bug detection area (DA) at the defined time instance, tᵢ, by, in response to receiving an image input signal (S_{IMAGE}), provide each image (600ᵢ) as input (IN) to the first ANN (190) and obtain an output (OUT) from the first ANN (190) indicative of the number of detected bed bugs present in the bed bug detection area (DA) at each defined time instance, tᵢ.

3. The system (200) according to claim 1 or 2, wherein the processing device (210) or the first ANN (190) is configured to determine the efficiency parameter of the bed bug treatment session by determining an accumulated number of bed bugs captured since the beginning of the current treatment session.

4. The system (200) according to any one of the preceding claims, wherein the processing device (210) is configured to determine the efficiency parameter of the bed bug treatment session by determining a trend of the development of the bed bug infestation over time based on the number of detected bed bugs at the defined time instances t_{(1..N)} or the accumulated number of bed bugs at the defined time instances t_{(1..N)}.

5. The system (200) according to claim 4, wherein the processing device (210) is further configured to determine if the bed bug treatment session is completed or predict a time, t_{PRED}, when the bed bug treatment session is expected to be completed, based on a comparison of the determined trend of the development of the bed bug infestation over time and historical data (HD) obtained from a non-volatile data carrier (250, 320) comprised in or connected to the system (200).

6. The system (200) according to any one of the preceding claims, wherein the processing device (210) is further configured to provide an output signal (Sₒᵤₜ) indicative of the determined efficiency parameter of the bed bug treatment session, or indicating that the bed bug treatment session is completed, or indicating the predicted time, t_{PRED}, when the bed bug treatment session is expected to be completed.

7. The system (200) according to any one of the preceding claims, wherein the bed bug trap element (180) is configured to stop bed bugs from leaving the bed bug detection area (DA) once they have entered it.

8. The system (200) according to claim 7, wherein the bed bug trap element (180) comprises a deadfall trap, a sticky trap, an insecticide, a viscous liquid, or any combination thereof.

9. The system (200) according to any one of the preceding claims, wherein the processing device (210) is configured to define at least one emission cycle and to control an emission of the bed bug attractant (11) from the bed bug attracting device (10) based on the defined at least one emission cycle.

10. The system (200) according to any one of the preceding claims, wherein the processing device (210) is further configured to: determine an adjustment of the operation of the bed bug attracting device (10) based on a set of input parameters including a selection of: the image input signal (S_{IMAGE}), at least one sensor input signal (S_{SENS}) indicative of temperature, concentration of attractant and/or other relevant properties measured in or at the bed bug attracting device, historical data (HD) stored in a memory (250, 320) of the system (200), output (OUT) from the first trained ANN (190), or user input (S_{USER}) from a user interface of an input device (230) integrated in or communicatively connected to the system (200); and to prompt an operator of the system (200) to adjust the operation of the bed bug attracting device (10) according to the determined adjustment.

11. The system (200) according to any one of the preceding claims, wherein the processing device (210) is further configured to determine an adjustment of the operation of the bed bug attracting device (10) based on the set of input parameters, and to generate a first control signal (C1) configured to control the bed bug attracting device (10) according to the determined adjustment.

12. A computerized method for monitoring a bed bug treatment session by a system (200) comprising a bed bug attracting device (10) for performing the bed bug treatment in a space where a bed bug infestation is determined or suspected, the bed bug attracting device (10) comprising a bed bug attractant (11) and a bed bug trap element (180); a camera system (220), comprising at least one image capture device (222), being arranged at a bed bug detection area (DA) in connection with the bed bug trap element (180); and a processing device (210) communicatively connected to the camera system (220), wherein the method comprises:
- repeatedly capturing, using the at least one image capture device (222) of the camera system (220), images (600) of the bed bug detection area (DA) at a plurality of time instances, t_{(1..N)} during a bed bug treatment session,
- repeatedly sending image input signals (S_{IMAGE}) indicative of the captured images (600) from the camera system (220) to the processing device (210);
- repeatedly receiving, by the processing device (210), an image input signal (S_{IMAGE}) indicative of at least one image (600ᵢ) captured at a defined time instance, tᵢ, from the camera system (220);
- in response to each captured image (600ᵢ), by the processing device (210):
- detecting bed bugs present in the bed bug detection area (DA) based on the captured image (600ᵢ); and
- determining the number of detected bed bugs in the bed bug detection area (DA) at the defined time instance, tᵢ; and
- determining, by the processing device (210), an efficiency parameter that is indicative of the efficiency of the bed bug treatment session based at least on the number of detected bed bugs present in the bed bug detection area (DA) at the defined time instances, t_{(1..N)}.

13. The method according to claim 12, wherein the step of, for each captured image (600ᵢ), detecting bed bugs present in the bed bug detection area (DA) comprises inputting, by the processing device (210) each image (600ᵢ) in a received image input signal (S_{IMAGE}) to a first trained ANN (190) configured to detect bed bugs present in the bed bug detection area (DA) and determine the number of detected bed bugs in the bed bug detection area (DA) at the defined time instance, tᵢ based on the image (600ᵢ), and obtaining .

14. The method according to claim 12 or 13, wherein determining the efficiency parameter of the bed bug treatment process comprises determining an accumulated number of bed bugs captured since the beginning of the current treatment process.

15. The method according to any one of the claims 12 to14, wherein determining the efficiency parameter of the bed bug treatment process comprises determining a trend of the development of the bed bug infestation over time based on the number of detected bed bugs at the defined time instances t_{(1..N)} and/or the accumulated number of bed bugs at the defined time instances t_{(1..N)}.

16. The method according to claim 15, further comprising determining if the bed bug treatment session is completed or predicting a time, t_{PRED}, when the bed bug treatment session is expected to be completed, by comparing the determined trend of the development of the bed bug infestation over time and historical data (HD) obtained from a non-volatile data carrier (250, 320) comprised in or connected to the system (200).

17. The method according to any one of the claims 12 to 16, further comprising providing, by the processing device (210), an output signal (Sₒᵤₜ) indicative of the determined efficiency parameter of the bed bug treatment session, or indicating that the bed bug treatment session is completed, or indicating the predicted time, t_{PRED}, when the bed bug treatment session is expected to be completed.

18. The method according to any one of the claims 12 to 17, further comprising defining, by the processing device (210), at least one emission cycle and controlling, by the processing device (210), an emission of the bed bug attractant (11) from the bed bug attracting device (10) based on the defined at least one emission cycle.

19. The method according to any one of the claims 12 to 18, further comprising determining, by the processing device (210), an adjustment of the operation of the bed bug attracting device (10) based the determined efficiency parameter of the treatment and historical data.

20. The method according to claim 19, further comprising prompting, by an output device (240), an operator of the system (200) to adjust the operation of the bed bug attracting device (10) based on the determined adjustment or generating a first control signal (C1) configured to control the bed bug attracting device (10) to adjust the operation of the bed bug attracting device (10) based on the determined adjustment.

21. A computer program (325) loadable into a non-volatile data carrier (320) communicatively connected to a processing unit (310), the computer program (325) comprising software for executing the method according to any one of the method claims 12 to 20 when the computer program (325) is run on the processing unit (310).

22. A non-volatile data carrier (320) containing the computer program (325) of claim 21.
